# EUROPÄISCHE PATENTANMELDUNG

(11) **EP 1 920 964 A2**
(43) Veröffentlichungstag der Anmeldung: **14.05.2008**
(21) Anmeldenummer: 07021400.2
(22) Anmeldetag: 02.11.2007
(51) Int. Cl.: B60K 6/48, B60K 6/40

(54) **Baueinheit aus einem Verbrennungsmotor und einer elektrischen Maschine**

(30) Priorität: 13.11.2006 DE 102006053660
(71) Anmelder: ZF Friedrichshafen AG, 88038 Friedrichshafen (DE)
(72) Erfinder: Wiggen, Peter, 97506 Grafenrheinfeld (DE); Peinemann, Bernd, 97464 Niederwerrn (DE); Pagels, Olaf, 97493 Bergrheinfeld (DE); Zimmer, Manfred, 97475 Zeil (DE); Kleuker, Christoph, 97422 Schweinfurt (DE); Niehaus, Udo, 97453 Schonungen (DE); Kühner, Michael, 97523 Schwanfeld (DE); Matschas, Steffen, 97469 Gochsheim (DE); Bartha, Alexander Dr., 97082 Würzburg (DE)

(57) **Zusammenfassung**

Die Erfindung betrifft eine Baueinheit (10) aus einem Verbrennungsmotor (12) und einer Elektromaschine (14), wobei der Verbrennungsmotor (12) ein Gehäuse (18) mit einer darin gelagerten Kurbelwelle (20) und die Elektromaschine (14) einen an einem feststehenden Bauteil drehbar gelagerten Rotor (26) mit einer Rotorwelle (24) und einen radial zu dem Rotor (26) angeordneten Stator (22) umfasst und wobei die Kurbelwelle (20) zumindest mittelbar und zumindest zeitweise über eine Koppelstelle (42,44) mit der Rotorwelle (24) wirkverbunden ist. Bei einem gegenseitigen Versatz von Kurbelwelle (20) und Rotorwelle (24) wird vorgeschlagen, an der Baueinheit (10) separate erste und zweite Ausgleichsmittel (48) auszuführen, um somit die beim Betreiben der Baueinheit (10) auftretenden Taumelkräfte auffangen zu können.

## Beschreibung

Die Erfindung betrifft eine Baueinheit aus einem Verbrennungsmotor und einer elektrischen Maschine gemäß dem Oberbegriff des Patentanspruchs 1.

Eine solche Baueinheit ist bereits aus dem Stand der Technik bekannt und findet beispielsweise als Antriebsanordnung für ein Hybridfahrzeug Verwendung, wobei das Fahrzeug je nach Anforderung rein verbrennungsmotorisch, rein elektromotorisch oder in einer gemischten Betriebsweise von beiden Antriebsaggregaten angetrieben werden kann.

Bei einer derartigen Baueinheit besteht die Forderung, dass die Kurbelwelle des Verbrennungsmotors und gegebenenfalls eine eingefügte Verlängerung sowie die Rotorwelle der Elektromaschine möglichst genau fluchten und ein Axial- und/oder ein Radialversatz der beiden Wellen möglichst vermieden wird. Andernfalls treten beim Betreiben der Baueinheit an den Wellen und deren Lagerstellen unerwünschte Radialkräfte auf, welche die genannten Bauteile erheblich über das vorgesehene Maß hinaus beanspruchen und die zu einem insgesamt unrunden Lauf und zu einem vorzeitigen Verschleiß der Baueinheit führen können.

Ein Wellenversatz kann bereits statisch infolge einer toleranzbehafteten Fertigung und Montage der Baueinheit verursacht sein oder aber dynamisch, z.B. durch Kurbelwellen-Taumelschwingungen des laufenden Verbrennungsmotors hervorgerufen werden.

Von dieser Problematik ausgehend, stellt sich die Erfindung die Aufgabe, eine Baueinheit der eingangs genannten Art so zu verbessern, dass die bei einem gegenseitigen Versatz, insbesondere einem Radialversatz von Kurbelwelle und Rotorwelle auftretenden Kräfte ohne nachteilige Wirkungen auf die Lebensdauer der Baueinheit aufgenommen werden können.

Diese Aufgabe wird durch eine gattungsgemäße Baueinheit mit dem kennzeichnenden Merkmal von Anspruch 1 gelöst.

Die Erfindung basiert auf dem Gedanken, dass ein Radialversatz und ggf. ein zusätzlicher Winkelversatz von zwei koaxial gekoppelten Wellen nicht allein durch ein einziges Ausgleichsmittel kompensierbar ist, sondern dass dafür zumindest zwei separate Ausgleichsmittel erforderlich sind. Durch deren Wirkung kann eine vorerwähnte Fehlstellung stufenweise kompensiert werden. Das hat den Vorteil, dass die von den einzelnen Mitteln aufzunehmenden Taumelkräfte im Vergleich zu nur einem einzigen Ausgleichsmittel relativ klein gehalten werden können und die störende Gesamtbelastung auf beide Ausgleichsmittel verteilt werden kann. Somit können anstelle eines aufwändig zu realisierenden einzigen Ausgleichsmittels mit einer großen Elastizität oder Taumelweichheit zwei oder mehrere einfacher darzustellende und weniger aufwändige Ausgleichsmittel mit einer demgegenüber relativ geringen Taumelweichheit in die Baueinheit integriert werden. Die auftretenden Taumelkräfte werden auf diese Weise von mindestens zwei vorbestimmten taumelweichen Elementen aufgefangen, wodurch andere, gefährdete Bauteile, z.B. Lager, in dem durch Taumeln verursachten Kraftfluss spürbar entlastet werden.

Vorteilhafte Weiterbildungen und Ausgestaltungen der Erfindung sind in den Unteransprüchen beschrieben.

Nachfolgend wird die Erfindung beispielhaft unter Bezug auf die beigefügten Figuren beschrieben. Es zeigen:
- Fig. 1: eine Baueinheit aus einem Verbrennungsmotor und einer Elektromaschine;
- Fig. 2: eine Baueinheit gemäß Fig. 1 mit einem taumelweich am Verbrennungsmotor angeordneten Lagertäger zur Rotorlagerung der Elektromaschine;
- Fig. 3: eine Baueinheit gemäß Fig. 1 mit einem taumelweich ausgeführten Lagerträger zur Rotorlagerung der Elektromaschine;
- Fig. 4: eine Baueinheit gemäß Fig. 1, wobei ein Taumel-Ausgleichsmittel zwischen einem Lagerträger und einem Lager vorgesehen ist;
- Fig. 5: eine Baueinheit gemäß Fig. 1 mit einem winkelbeweglichen Lager zur Rotorlagerung.

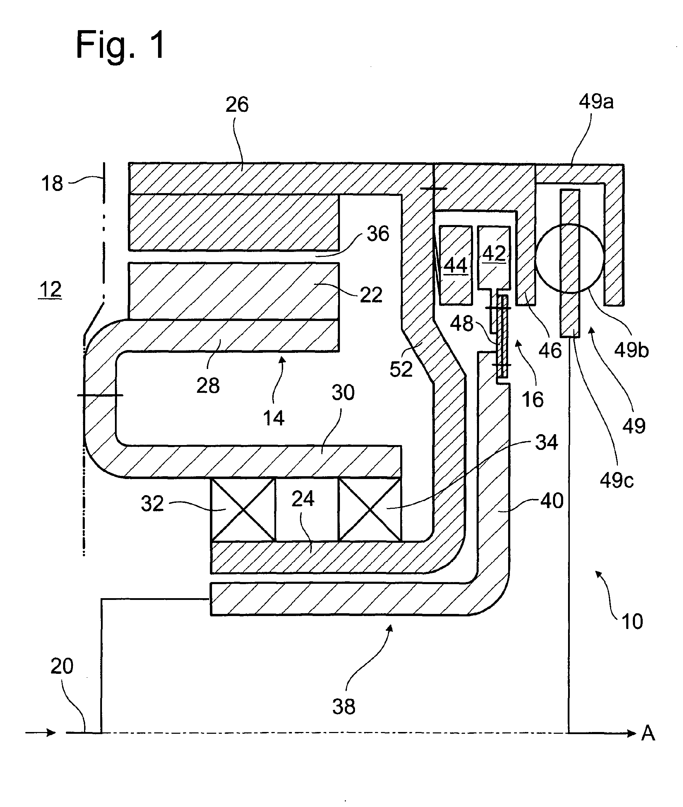

In Fig. 1 ist schematisch die obere Halbebene einer bezüglich einer Achse A symmetrisch aufgebauten Baueinheit 10 aus einem Verbrennungsmotor 12, einer Elektromaschine 14 und einer in Wirkverbindung zwischen diesen angeordneten schaltbaren Trennkupplung 16 dargestellt. Dabei umfasst der Verbrennungsmotor 12 ein Gehäuse 18 und eine darin drehbar gelagerte Kurbelwelle 20 und die Elektromaschine 14 umfasst einen Stator 22 und einen um diesen auf einer Rotorwelle 24 umlaufenden Rotor 26. Die Elektromaschine 14 ist in diesem Ausführungsbeispiel als permanenterregte Synchronmaschine in Außenläuferbauart ausgeführt, jedoch kann diese ebenso als Innenläufer ausgebildet sein und nach einem anderen Funktionsprinzip arbeiten.

Die Baueinheit 10 ist als Antriebsquelle für ein Hybridfahrzeug vorgesehen, welches je nach Anforderung rein verbrennungsmotorisch, rein elektromotorisch oder in einer gemischten Betriebsweise von beiden Aggregaten 12, 14 antreibbar ist. Zum Starten des Verbrennungsmotors 12 ist der Drehmomentfluss auch in der entgegengesetzten Richtung, also von der Elektromaschine 14 in Richtung Verbrennungsmotor 12 möglich.

Die Elektromaschine 14 ist unmittelbar am Verbrennungsmotor 12 angeordnet, wobei deren Stator 22 mittels eines Statorträgers 28 am Gehäuse 18 des Verbrennungsmotors 12 festgelegt ist. Der topfförmig ausgebildete Rotor 26 weist in dessen radial inneren Bereich einen die Rotorwelle 24 ausbildenden Rohrfortsatz auf, der in eine Zentralausnehmung eines am Verbrennungsmotorgehäuse 18 festgelegten und sich mit diesem axial überlappenden Lagerträgers 30 eingreift und dort gelagert ist. In Fig. 1 ist der Lagerträger 30 rohrförmig und einteilig mit dem Statorträger 28 ausgeführt. Zur Aufnahme des Rotors 26 sind auf dem Lagerträger 30 zwei axial beabstandete Wälzlager 32, 34 angeordnet, wodurch der Rotor 26 unter Ausbildung eines in Umfangsrichtung konstanten Radialspaltes 36 betriebssicher zum Stator 22 gelagert ist.

An der in Fig. 1 nur schematisch dargestellten Kurbelwelle 20 ist zur Realisierung einer Drehmomentübertragung ein Mitnehmer 38 befestigt, der eine Kurbelwellenverlängerung darstellt und welcher konzentrisch innerhalb der Rotorwelle 24 geführt ist und sich mit einem nach außen gerichteten Radialabschnitt 40 parallel zum Rotor 26 erstreckt. Der Mitnehmer 38 dient als Eingangselement der als Reibungskupplung ausgeführten Trennkupplung 16, wozu dieser in dessen radial äußeren Bereich eine Kupplungsscheibe 42, bestehend aus einem Kupplungsbelagträger mit beidseitig aufgebrachten Reibbelägen, aufweist. Die Trennkupplung 16 wird vervollständigt durch eine axial benachbarte und durch die Wirkung eines nicht dargestellten Betätigungssystems axial in Richtung der Kupplungsscheibe 42 verlagerbare Anpressplatte 44 und durch eine auf der gegenüberliegenden Seite angeordneten und sich am Rotor 26 abstützenden Gegenanpressplatte 46.

Die Kupplungsscheibe 42 dient somit bei geschlossener Kupplung als Koppelelement zwischen der Kurbelwelle 20 einerseits und dem Rotor 26 bzw. der Rotorwelle 24 andererseits. Der Mitnehmer 38 weist zusätzlich zwischen dessen Radialabschnitt 40 und der Kupplungsscheibe 42 einen ringförmigen, z.B. mittels Federblech, taumelweich ausgestalteten Bereich 48 auf, welcher sich beim Auftreten eines Versatzes der Wellen 20, 24 und einer daraus resultierenden Kraftwirkung elastisch verformen kann und der somit als ein erstes Ausgleichsmittel zum Ausgleich eines Versatzes von Kurbelwelle 20 und Rotorwelle 24 fungiert.

In Fig. 1 ist ferner ein Torsionsschwingungstilger 49 angeordnet, dessen Eingangsteil von einem rotorseitig festen Gehäuse gebildet wird, welches ein über dieses eingeleitete Drehmoment über zumindest ein zwischengeschaltetes Federelement 49b an ein scheibenförmiges, sich nach radial innen erstreckendes Ausgangsteil 49c weiterleiten kann und dabei auftretende Drehmomentstöße absorbiert. Das Drehmoment kann dann weiter, z.B. über eine Schaltkupplung und ein Schaltgetriebe, auf die Räder des Fahrzeugs übertragen werden.

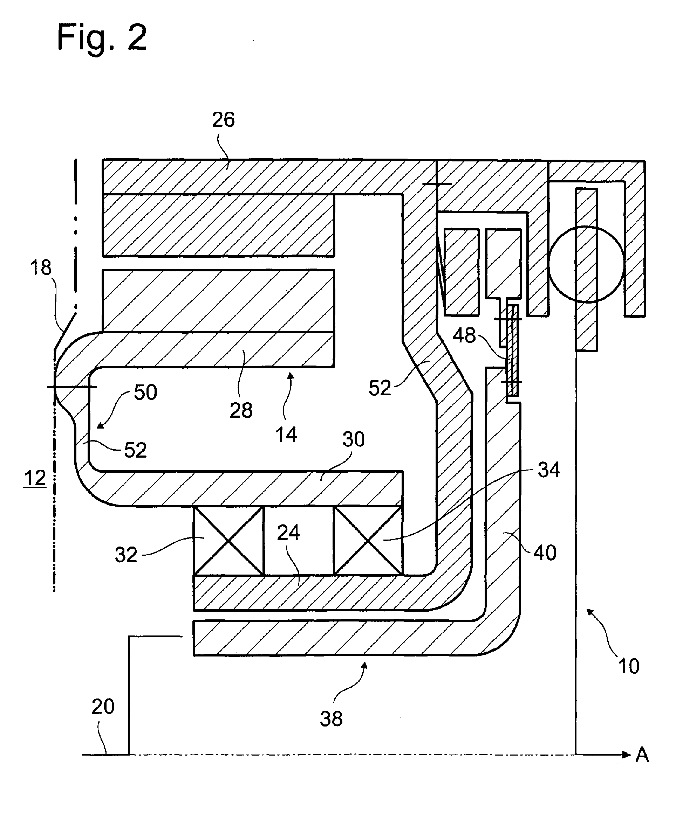

Gemäß der Erfindung ist in den Fig. 2-5 ein weiteres, zweites Ausgleichsmittel zum Ausgleich eines Versatzes von Kurbelwelle 20 und Rotorwelle 24 an einer Baueinheit 10 vorgesehen. Sofern nicht anders beschrieben, entspricht der Grundaufbau der Baueinheiten 10 der in Fig. 1 erläuterten.

Zur Darstellung eines zweiten Ausgleichsmittels wird vorgeschlagen, einen außerhalb der eigentlichen Lagerstelle befindlichen Abschnitt des Lagerträgers 30 taumelweich zu gestalten oder den Lagerträger als Ganzes taumelweich an dessen Tragestruktur, z.B. dem Verbrennungsmotorgehäuse, anzuordnen bzw. aufzuhängen. Insbesondere ist der in Fig. 2 gezeigte rohrförmige Lagerträger 30 mit einem Radialflansch 50 am Verbrennungsmotorgehäuse 18 festgelegt, wobei ein Teilbereich 52 des Radialflansches 50 verjüngt ausgeführt und unter dem Einfluss von Taumelbewegungen bedingt elastisch verformbar ist und somit einwirkende Taumelkräfte aufnehmen kann. Denkbar ist auch, zwischen der Tragestruktur, hier dem Verbrennungsmotorgehäuse 18 und dem Lagerträger 30 ein elastisches, z.B. gummielastisches Zwischenelement anzuordnen, wodurch der an sich steife Lagerträger 30 zum Taumeln angeregt werden kann.

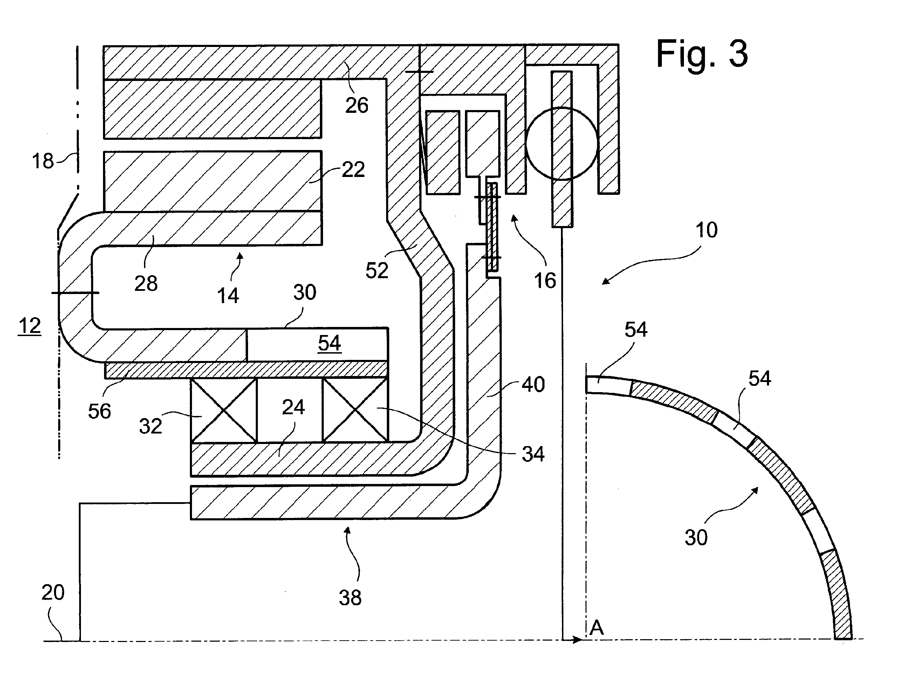

In einem weiteren Ausführungsbeispiel gemäß Fig. 3 ist der Lagerträger 30 zur Darstellung eines zweiten Ausgleichsmittels selbst taumelweich ausgeführt. Dazu sind an dem, dem Rotorrücken 52 zugewandten Bereich des Lagerträgers 30 mehrere in Umfangsrichtung beabstandete Axialschlitze 54 eingebracht, so dass sich bei einer einwirkenden Taumelkraft der geschlitzte Axialabschnitt periodisch gegenüber dem benachbarten Axialabschnitt radial verlagern und Taumelkräfte aufnehmen kann.

Es ist erkennbar, dass unter Einfügung einer Passhülse 56 das Wälzlager 34 axial am geschlitzten Bereich und das Lager 32 außerhalb dieses Bereichs angeordnet ist, so dass sich bei einer Belastung die axial beabstandeten Lager 32, 34 radial zueinander verlagern können.

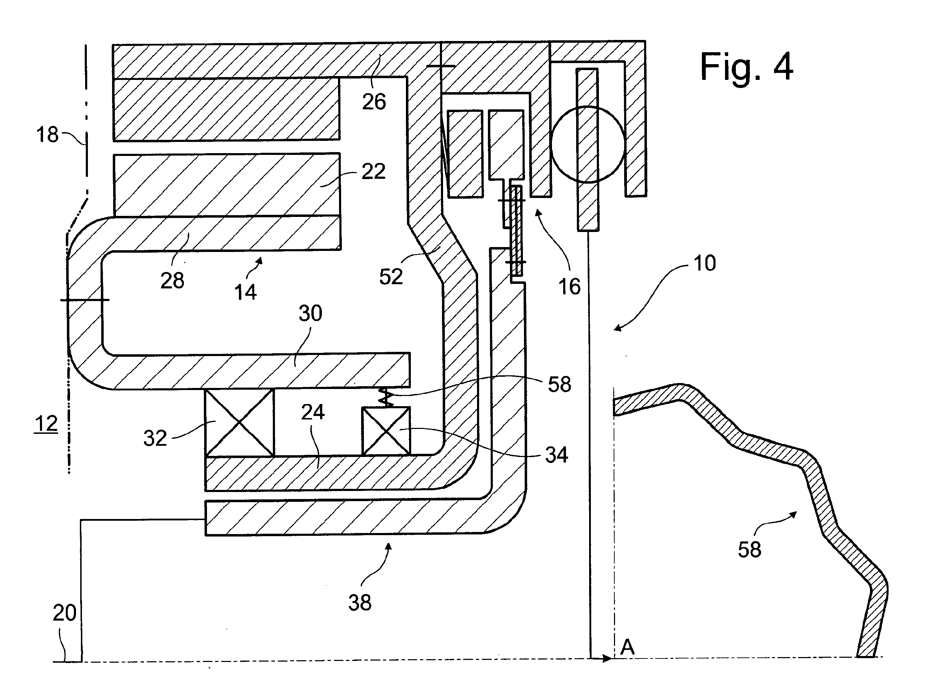

Gemäß einer noch weiteren in Fig. 4 dargestellten Variante einer Baueinheit 10 kann das zweite Ausgleichsmittel auch zwischen einem Rotorlager 34 und dem Lagerträger 30 angeordnet sein. Hierzu ist das dem Rotorrücken 52 zugewandte Lager 34 mittels einem in radialer Richtung elastischen Ringelement 58, z.B. einem Blech-Konturring oder alternativ einem gummielastischen Ring am Lagerträger 30 angeordnet. Das verbrennungsmotorseitig angeordnete weitere Wälzlager 32 ist so dimensioniert, dass es innerhalb eines kleinen Winkelbereiches pendeln und damit als Gelenk wirken kann. Auch in diesem Fall ist ein Taumeln des Rotors 26 ohne eine Einschränkung der Lebensdauer der Baueinheit 10 möglich.

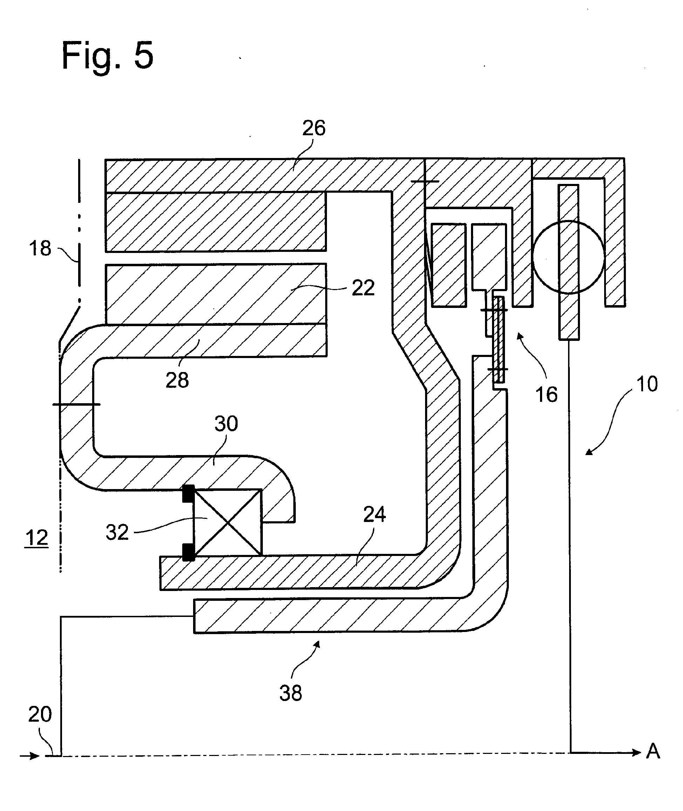

Es ist ferner, wie in Fig. 5 gezeigt, auch möglich, nur ein einziges Wälzlager 32 auszuführen und auf ein oder mehrere weitere Lager zu verzichten. Das einzige Wälzlager 32 ist dann winkelbeweglich mit einer erhöhten Lagerluft bzw. als Pendelkugellager ausgeführt.

Sofern dieses technisch vereinbar ist, können die in den Figuren 1-5 beschriebenen Ausgleichsmittel auch miteinander kombiniert und an einer Baueinheit realisiert werden, so dass die gemeinsam wirkenden Koppelmittel zusammen den erforderlichen Taumelausgleich erzielen können.

Es versteht sich, dass der Stator und der Rotor der Elektromaschine auch an einem anderem, zu dem Verbrennungsmotor festen Bauteil, gelagert werden können, bspw. an einem mit diesem verbundenen Zwischengehäuse oder einem Getriebegehäuse eines der Baueinheit nachgeordneten Gangwechselgetriebes. Weiterhin kann der Stator auch unabhängig vom Rotor an einem anderen der genannten Bauteile festgelegt sein.

## Patentansprüche

1. Baueinheit aus einem Verbrennungsmotor und einer Elektromaschine, wobei der Verbrennungsmotor ein Gehäuse mit einer darin gelagerten Kurbelwelle und die Elektromaschine einen an einem feststehenden Bauteil drehbar gelagerten Rotor mit einer Rotorwelle und einen radial zu dem Rotor angeordneten Stator umfasst und wobei die Kurbelwelle zumindest mittelbar und zumindest zeitweise über eine Koppelstelle mit der Rotorwelle wirkverbunden ist,
**dadurch gekennzeichnet,**
**dass** die Baueinheit separate erste und zweite Ausgleichsmittel zum Ausgleich eines Versatzes von Kurbelwelle und Rotorwelle aufweist.

2. Baueinheit nach Anspruch 1,
**dadurch gekennzeichnet,**
**dass** der Rotor an dem Gehäuse des Verbrennungsmotors gelagert ist.

3. Baueinheit nach Anspruch 1 oder 2,
**dadurch gekennzeichnet,**
**dass** das erste Ausgleichsmittel verbrennungsmotorseitig und das zweite Ausgleichsmittel elektromaschinenseitig von der Koppelstelle ausgeführt ist.

4. Baueinheit nach einem der vorhergehenden Ansprüche,
**dadurch gekennzeichnet,**
**dass** das erste Ausgleichsmittel als taumelweiches Koppelelement ausgeführt ist.

5. Baueinheit nach einem der vorhergehenden Ansprüche,
**dadurch gekennzeichnet,**
**dass** das zweite Ausgleichsmittel im Bereich der Lagerstelle des Rotors ausgeführt ist.

6. Baueinheit nach einem der vorhergehenden Ansprüche,
**dadurch gekennzeichnet,**
**dass** der Lagerträger taumelweich an dessen Tragestruktur aufgehängt ist.

7. Baueinheit nach einem der vorhergehenden Ansprüche,
**dadurch gekennzeichnet,**
**dass** der Lagerträger selbst taumelweich ausgeführt ist.

8. Baueinheit nach einem der vorhergehenden Ansprüche,
**dadurch gekennzeichnet,**
**dass** Ausgleichsmittel zwischen einem Rotorlager und dem Lagerträger angeordnet ist.

9. Baueinheit nach einem der vorhergehenden Ansprüche,
**dadurch gekennzeichnet,**
**dass** zur Lagerung des Rotors ein winkelbewegliches Lager vorgesehen ist.

10. Baueinheit nach einem der vorhergehenden Ansprüche,
**dadurch gekennzeichnet,**
**dass** die Koppelstelle als schaltbare Kupplung ausgeführt ist.

11. Baueinheit nach einem der vorhergehenden Ansprüche,
**dadurch gekennzeichnet,**
**dass** der Stator an dem Gehäuse des Verbrennungsmotors oder an einem mit diesem fest verbundenen Gehäuse einer weiteren Komponente gelagert ist.
